# EUROPEAN PATENT APPLICATION

(11) **EP 2 037 676 A1**
(43) Date of publication of application: **18.03.2009**
(21) Application number: 07116579.9
(22) Date of filing: 17.09.2007
(51) Int. Cl.: H04N 5/445, H04N 5/50

(54) **Mobile computing device and method for switching mobile television channels thereof**

(71) Applicant: High Tech Computer Corp., Taoyuan (TW)
(72) Inventor: Lin, Jian-Liang, Taoyuan (TW); Chou, Fu-Chiang, Taoyuan (TW)
(74) Representative: Lang, Christian

(57) **Abstract**

A method for switching mobile television channels of a mobile computing device includes the following steps: First, an original channel is played on a screen of the mobile computing device. A first channel number of a first selected channel is received at a first time point. Then, a second channel number of a second selected channel is received at a second time point, wherein a time interval between the first and second time points is less than a predetermined interval for action. A period of time from the second time point to an action time point is counted, wherein the period of time is equal to the predetermined time interval for action. Next, data bursts of the second selected channel are received and buffered from the action time point to a next time point. At last, the second selected channel is played on the screen from the next time point.

## Description

### BACKGROUND OF THE INVENTION

### Field of the Invention

The invention relates in general to a computing device and a method for switching television (TV) channels, and more particularly to a mobile computing device and a method for switching mobile TV channels thereof.

### Description of the Related Art

Digital Video Broadcasting (DVB) is a suite of internationally accepted open standards for digital television. Digital Video Broadcasting - Handheld (DVB-H) is one of the DVB standards for bringing broadcast mobile TV services to mobile computing devices. Radio signals for mobile TV channels are transmitted from broadcasting towers as data bursts in small time slots.

The DVB-H standard can reduces power consumption and extends battery life. The power saving made possible by DVB-H is derived from the fact that a tuner of the mobile computing device picks up parts of the data bursts for only one broadcasting channel at a time for being further processed while the data bursts transmitted from the broadcasting towers contain data of all the broadcasting channels available on Mobile TV. However, it takes time to switch from one channel to another channel for the buffering preparation of the newly selected channel. Normally, a time period for buffering data bursts of the newly selected channel is about 6 to 7 seconds.

Specifically, when users stop watching one channel and switch to another channel, a media player of the mobile computing device stops playing the current channel and the tuner picks up data bursts for the new channel and then feeds them into the media player for buffering, resulting in a multi-second delay before the new channel appeals on a screen of the mobile computing device. Further, it is common for users to scan through different TV channels in order to find something interesting to watch, especially for modern users who are caught channel surfing. A longer delay is therefore caused when extensive channel surfing.

In order to balance the trade-off between time and power consumption, US patent application with publication number US2007/0067815 entitled "Mobile Television Channel Switching System and Method" by Bowen et al. discloses that data is buffered from multiple channels in a buffer within the mobile TV device while the demodulator is cycled on and then the mobile TV device displays data from one of the buffered channels upon a request to switch to the channel prior to retuning the mobile TV device to the newly selected channel. However, it increases the cost to use multiple tuners for implementation since one tuner picks up data bursts for only one channel at a time for being further processed.

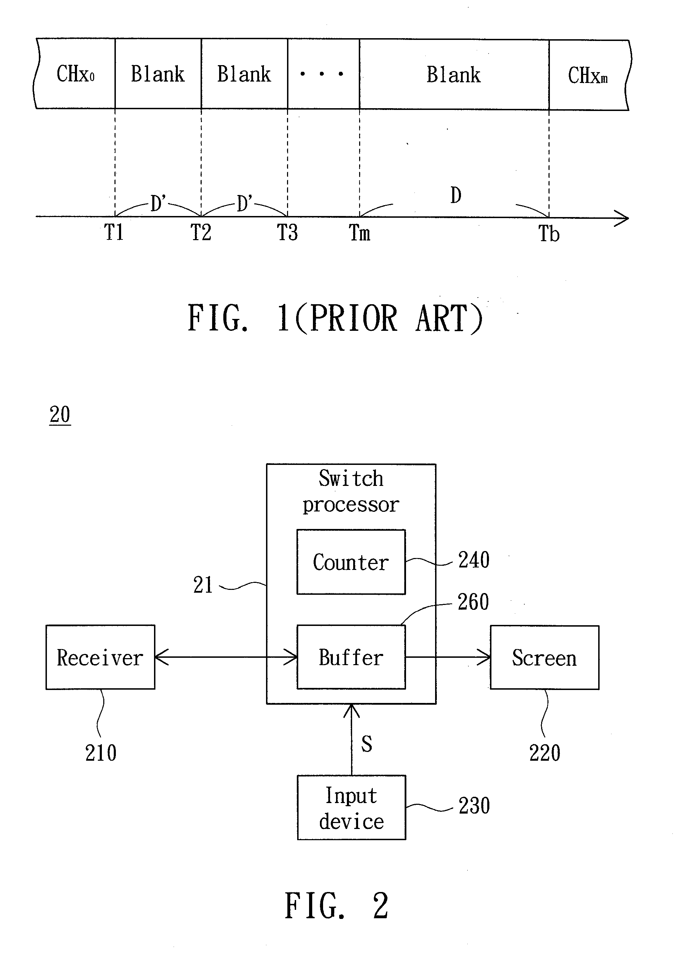

Referring to FIG. 1, a diagram illustrating that the timing involved in switching mobile TV channels during channel surfing for a conventional mobile computing device is shown. When the user selects one channel other than the current channel CHx₀ at a time point T1 and stops watching the channel CHx₀, the media player stops playing the current channel CHx₀ and the tuner begins to pick up the data bursts for the selected channel.
Although the user would like to quickly change channels again, the user has to wait until the switching process between the time point T1 and a time point T2 is complete and then selects another channel at the time point T2 at earliest. This switching process is repeated for every selected channel that the user surfs through. Each time the user selects a channel and then change to select another channel, it requires a period of time D' for switching. Generally, the switching period D' is about 2 seconds. If the user changes channels to extensively surf through m channels to channel CHxₘ, it takes time D'*(m-1) for switching between the time point T1 and a time point Tm and then takes time D for buffering between the time point Tm and a time point Tb. Besides, the screen is blank during the switching process and the buffering process. As shown in FIG. 1, the tuner stops picking up the data bursts for a previous channel and changes to start picking up data bursts for a newly selected channel at time points T1, T2, T3, ..., Tm according to user's selection. The user therefore has to spend time D'*(m-1)+D in total watching blank screens when data bursts of each channel he surfs through are received and buffered.

### SUMMARY OF THE INVENTION

The invention is directed to a mobile computing device and a method for switching mobile television (TV) channels thereof, allowing users to continue watching an original channel during channel surfing instead of watching blank screens. Besides, the channel switching process becomes quicker and easier.

According to a first aspect of the present invention, a method for switching mobile television (TV) channels of a mobile computing device is provided. The mobile TV channels comprise an original channel, a first selected channel and a second selected channel. The method comprises the following steps: First, the original channel is played on a screen of the mobile computing device. A first channel number of the first selected channel is received at a first time point. Then, a second channel number of the second selected channel is received at a second time point, wherein a time interval between the first and second time points is less than a predetermined interval for action. A period of time from the second time point to an action time point is counted, wherein the period of time is equal to the predetermined time interval for action. Next, data bursts of the second selected channel are received and buffered from the action time point to a next time point. At last, the second selected channel is played on the screen from the next time point.

According to a second aspect of the present invention, a method for switching mobile TV channels of a mobile computing device is provided. The mobile TV channels comprise an original channel and a plurality of selected channels. The method comprises the following steps: First, the original channel is played on a screen of the mobile computing device. A plurality of channel numbers of the selected channels are sequentially received at a plurality of time points correspondingly, wherein a time interval between adjacent two of the time points is less than a predetermined interval for action. A period of time is counted from a last one of the time points to an action time point, wherein the period of time between the last one of the time points and the action time point is equal to the predetermined time interval for action. Next, data bursts of a last one of the selected channels are received and buffered from the action time point to a next time point. At last, the last one of the selected channels is played on the screen from the next time point.

According to a third aspect of the present invention, a mobile computing device capable of switching mobile TV channels is provided. The mobile TV channels comprise an original channel and a plurality of selected channels. The device comprises: a receiver, a screen, an input unit, a counter, and a buffer. The receiver is for receiving data bursts of the original channel. The screen for playing the original channel thereon. The input unit is for sequentially receiving pieces of information of switching to the selected channels at a plurality of time points correspondingly, wherein a time interval between adjacent two of the time points is less than a predetermined interval for action. The counter is for counting time from a last one of the time points to an action time point, wherein a period of time between the last one of the time points and the action time point is equal to the predetermined time interval for action. The buffer is for buffering data bursts of a last one of the selected channels from the action time point to a next time point. After data bursts of a last one of the selected channels are received by the receiver and buffered by the buffer from the action time point to a next time point, the screen plays the last one of the selected channels thereon from the next time point.

According to a fourth aspect of the present invention, a computer readable recording medium, recording a program for switching mobile TV channels of a mobile computing device, is provided. The mobile TV channels comprise an original channel and a plurality of selected channels. The program causes a computer to execute the following steps: First, the original channel is played on a screen of the mobile computing device. A plurality of channel numbers of the selected channels are sequentially received at a plurality of time points correspondingly, wherein a time interval between adjacent two of the time points is less than a predetermined interval for action. A period of time is counted from a last one of the time points to an action time point, wherein the period of time between the last one of the time points and the action time point is equal to the predetermined time interval for action. Next, data bursts of a last one of the selected channels are received and buffered from the action time point to a next time point. At last, the last one of the selected channels is played on the screen from the next time point.

The invention will become apparent from the following detailed description of the preferred but non-limiting embodiments. The following description is made with reference to the accompanying drawings.

### BRIEF DESCRIPTION OF THE DRAWINGS

FIG. 1 (Prior Art) is a diagram illustrating that the timing involved in switching mobile TV channels during channel surfing for a conventional mobile computing device.

FIG. 2 shows a block diagram of a mobile computing device according to an embodiment of the invention.

FIG. 3 shows a flow chart of a method for switching mobile TV channels of the mobile computing device in FIG. 2.

FIG. 4A is a diagram illustrating that the timing involved in switching mobile TV channels during a channel surfing according to the first embodiment of the invention.

FIG. 4B is a diagram illustrating that the timing involved in switching mobile TV channels during a channel surfing according to the second embodiment of the invention.

FIG. 5 shows the screen of the mobile computing device in FIG. 2.

### DETAILED DESCRIPTION OF THE INVENTION

Referring to FIG. 2, a block diagram of a mobile computing device according to an embodiment of the invention is shown. The mobile computing device 20 is capable of switching mobile TV channels which includes at least an original channel and a plurality of selected channels. The mobile computing device 20 includes a receiver 210, a screen 220, an input unit 230, and a switch processor 21. The switch processor 21 includes a counter 240 and a buffer 260. The receiver 210 is for receiving data bursts of the original channel. The screen 220 is for playing the original channel thereon. The input unit 230 is for sequentially receiving a plurality pieces of information of switching to the selected channels at a plurality of time points correspondingly, wherein a time interval between adjacent two of the time points is less than a predetermined interval for action. The counter 240 is for counting time from a last one of the time points to an action time point, wherein a period of time between the last one of the time points and the action time point is equal to the predetermined time interval for action. The buffer 260 is for buffering data bursts of a last one of the selected channels from the action time point to a next time point. After data bursts of a last one of the selected channels are received by the receiver 210 and buffered by the buffer 260 from the action time point to a next time point, the screen 220 plays the last one of the selected channels thereon from the next time point.

Further, the screen 220 sequentially displays the channel numbers on the screen, responsive to reception of the corresponding piece of information from the input unit. When the channel numbers are sequentially displayed responsive to reception of the corresponding channel number, the screen plays the original channel. The counter 240 further counts time from each of the time points and then stops counting time, responsive to reception of a subsequent one of the plurality pieces of information.

In practical implementation, the mobile computing device 20 can be a mobile phone, a personal digital assistant (PDA), a smart phone, a Blackberry or other handheld device with mobile TV capabilities. The receiver 210 may include an antenna assembly. The input unit 230 can be a keypad, function buttons, a joystick, or a touch panel. Preferably, the keypad includes numeral keys for pressing the channel number of the selected channel and direction keys for switching to a channel immediately preceding or succeeding the original channel.

### First Embodiment:

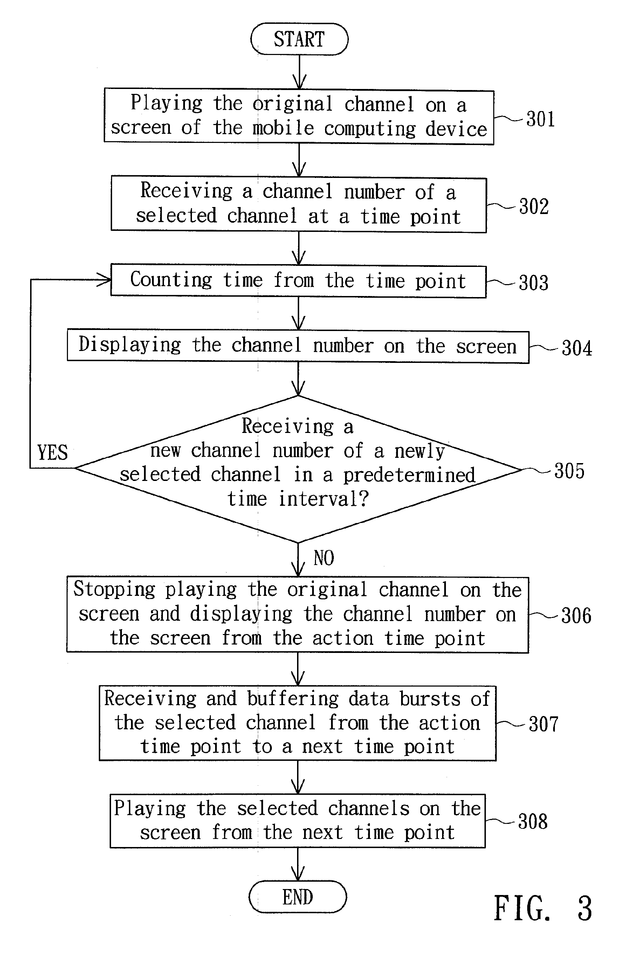

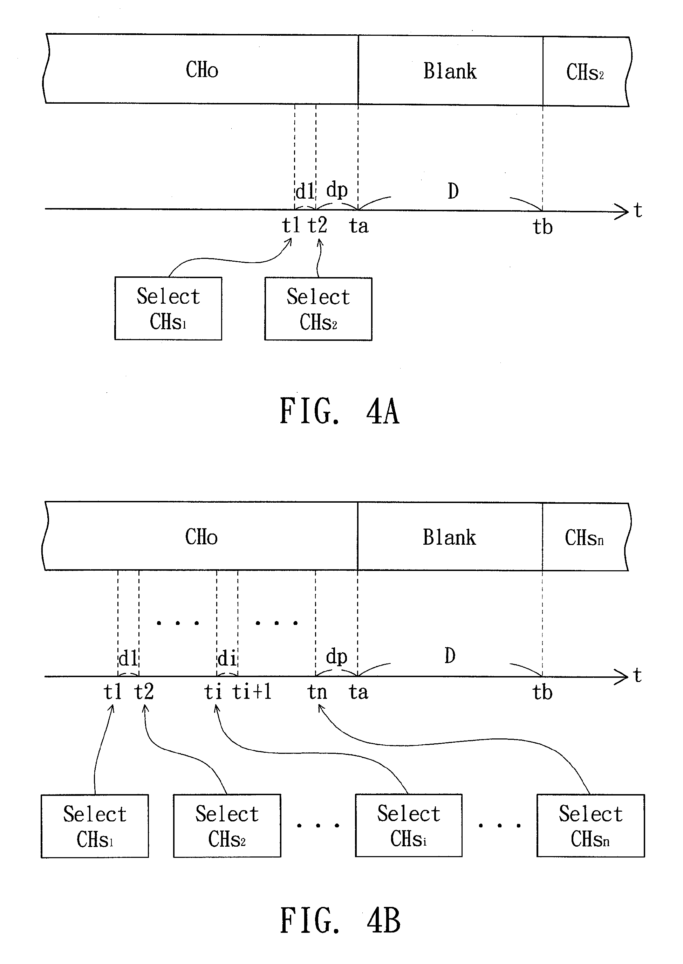

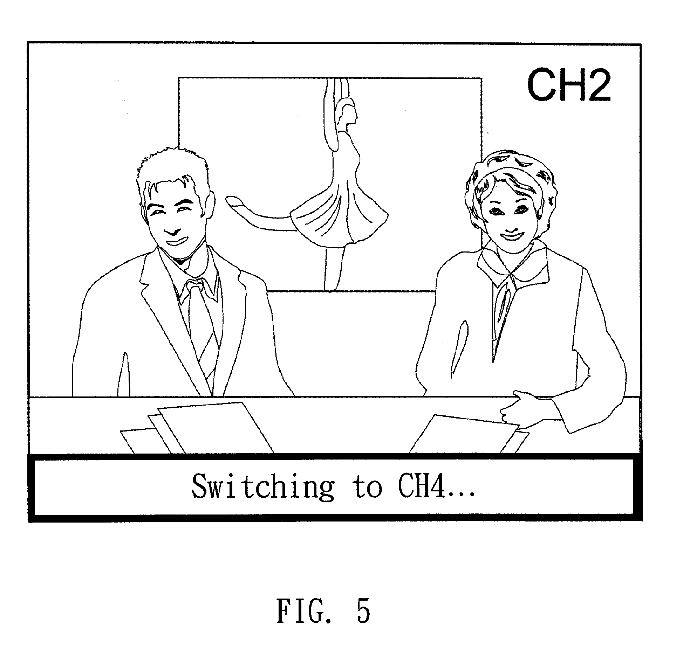

Referring to FIGS. 3 and 4A, FIG. 3 is a flow chart of a method for switching mobile TV channels of a mobile computing device in FIG.2, and FIG. 4A is a diagram illustrating that the timing involved in switching mobile TV channels during a channel surfing according to a first embodiment of the invention. The method starts at step 301 in which the original channel CHo is played on the screen 220 of the mobile computing device 20. Then, in step 302, a channel number of a selected channel is received at a time point. As shown in FIG. 4A, the user selects channel CHs₁ at a time point t1. Besides, in step 303, the counter 240 starts to count time from the time point t1. In step 304, the channel number of the channel CHs₁ is displayed on the screen 220, responsive to reception of the corresponding channel number of the channel CHs₁; meanwhile, the screen 220 keeps playing the original channel thereon. For example, referring to FIG. 5, which illustrates the screen of the mobile computing device in FIG. 2, the original channel CHo is channel 2 while the selected channel CHs₁ is channel 4. The screen 220 not only plays the channel 2 but also displays the information of channel 4 "Switching to Channel 4..." The information of the selected channel can be channel number, channel logo, program name or other representative information. In step 305, the switching processor 21 determines whether a new channel number of a newly selected channel is received in a predetermined time interval tp; if yes, the method returns to step 303; and if no, the method proceeds to step 306. The predetermined time interval dp is far less than the buffering period D. For example, the predetermined time interval dp is about 1 second while the buffering time period is about 6 to 7 seconds.

As shown in FIG. 4A, the user quickly changes channels again by selecting channel CHs₂ at a time point t2 and the time interval d1 between the adjacent time points t1 and t2 is less than a predetermined interval dp for action. Thus, the counter 240 stops counting time, responsive to reception of the channel number of the subsequent channel CHs₂. Since the new channel number of the subsequent channel CHs₂ is received in a predetermined time interval dp, the method returns to step 303 to restart counting from the second time point t2. Then, in step 304, the screen 220 is switched to display the channel number of the channel CHs₂, responsive to reception of this channel number; meanwhile, the screen 220 keeps playing the original channel thereon. The method proceeds to step 305 again. Since the counter 240 keeps counting time from the second time point t2 to an action time point ta, the switch processor 21 determines that no new channel number is received in a predetermined time interval dp, wherein a period between the second time point t2 and the action time point ta is equal to the predetermined period of time. This means the user stop channel surfing. Thus, the method proceeds to step 306.

In step 306, the screen 220 stops playing the original channel CHo and stops displaying the channel number of the channel CHs₂ on the screen 220 from the action time point t2. In step 307, data bursts of the selected channel CHs₂ are received and buffered from the action time point ta to a next time point tb. The receiver 210 begins to pick up the data bursts for the channel CHs₂. At last, in step 308, the last selected channel CHs₂ is played on the screen 220 from the next time point tb.

During this channel surfing, data bursts of the selected channels will not be received for buffering if the user continues to select another channel within the predetermined interval dp. Only when the user stops channel surfing, data bursts of the last selected channel CHs₂ will be received and buffered. As compared with FIG. 1 (m=2), the method for switching mobile TV channels according to the first embodiment takes time d1+dp+D in total to surf through 2 channels. Since time interval d1 is less than a predetermined interval dp and the predetermined interval dp is not greater than a half of the switching time D' in FIG. 1, the time period d1+dp+D in FIG. 4A is less than the time period D'*(m-1)+D (m=2) in FIG. 1, thus making the channel switching process quicker and easier. Moreover, the screen 220 remains playing the original channel CHo during channel surfing before the receiver 210 starts to receive data bursts of the last selected channel CHs₂ from the time point ta. Thus, instead of spending a lot of time watching blank screens, the user can keep watching the original channel CHo during channel surfing.

### Second Embodiment:

Referring to FIGS. 2, 3 and 4B, FIG. 4B is a diagram illustrating that the timing involved in switching mobile TV channels during a channel surfing according to a second embodiment of the invention. The method starts at step 301 in which the original channel CHo is played on the screen 220 of the mobile computing device 20. Then, in step 302, a channel number of a selected channel is received at a time point. As shown in FIG. 4B, the user selects channel CHs₁ at a time point t1. Besides, in step 303, the counter 240 starts to count time from the time point t1. In step 304, the channel number CHs₁ is displayed on the screen 220, responsive to reception of the corresponding channel number of the channel CHs₁; meanwhile, the screen 220 keeps playing the original channel thereon. For example, referring to FIG. 5, the original channel CHo is channel 2 while the selected channel CHs₁ is channel 4. The screen 220 not only plays the channel 2 but also displays the information of channel 4 "Switching to Channel 4..." The information of the selected channel can be channel number, channel logo, program name or other representative information. In step 305, the switching processor 21 determines whether a new channel number of a newly selected channel is received in a predetermined time interval tp; if yes, the method returns to step 303; and if no, the method proceeds to step 306. The predetermined time interval dp is far less than the buffering period D. For example, the predetermined time interval dp is about 1 second while the buffering time period is about 6 to 7 seconds.

As shown in FIG. 4B, the user quickly changes channels again and again by sequentially selecting channel CHsᵢ at a time point ti, where i=2, ... to n-1 (n is a positive integer). Thus, the counter 240 stops counting time, responsive to reception of a subsequent one of the channel numbers. The time interval di between the adjacent time of the time points ti and ti+1 is less than a predetermined interval dp for action. That is, each of the new channel number of the channel CHsᵢ is received in a predetermined time interval dp, the method returns to proceed steps 303, 304 and 305 repeatedly to restart counting from the second time point ti in step 303, switching to display the channel number CHsᵢ in step 304, and determining that a new channel number of a newly selected channel CHsᵢ+₁ is received in the predetermined time interval dp in step 305. When the screen 220 displays the channel number CHsᵢ, the screen 220 keeps playing the original channel thereon. After the user lastly changes channels by selecting channel CHsₙ at a time point tn, the counter 240 keeps counting time from the last time point tn to the action time point ta, the switch processor 21 determines that no new channel number is received in a predetermined time interval dp, wherein a period between the second time point tn and the action time point ta is equal to the predetermined period of time. This means the user stop channel surfing. Thus, the method proceeds to step 306.

In step 306, the screen 220 stops playing the original channel CHo and stops displaying the channel number CHsₙ on the screen 220 from the action time point tn. In step 307, data bursts of the selected channel CHsₙ are received and buffered from the action time point ta to a next time point tb. The receiver 210 begins to pick up the data bursts for the channel CHsₙ. At last, in step 308, the last selected channel CHsₙ is played on the screen 220 from the next time point tb.

During this channel surfing, data bursts of the selected channels will not be received for buffering if the user continues to select another channel within the predetermined interval dp. Only when the user stops channel surfing, data bursts of the last selected channel CHsₙ will be received and buffered. As compared with FIG. 1 (m=n), the method for switching mobile TV channels according to the second embodiment takes time period Σdi (i=1 to n-1)+dp+D in total between the first time point 1 and the next time point tb to surf through n channels. Since each time interval di is less than a predetermined interval dp and the predetermined interval dp is not greater than a half of the switching time D' in FIG. 1, the time periodΣ- di (i=1 to n-1)+dp+D in FIG. 4A is less than the time period D'*(m-1)+D (m=n) in FIG. 1, thus making the channel switching process quicker and easier. Moreover, the screen 220 remains playing the original channel CHo during channel surfing before the receiver 210 starts to receive data bursts of the last selected channel CHsₙ from the time point ta. Thus, instead of spending a lot of time watching blank screens, the user can keep watching the original channel CHo during channel surfing.

The mobile computing device and the method for switching mobile TV channels thereof according to above-mentioned embodiments allow users to continue watching the original channel during channel surfing instead of spending a lot of time watching blank screens. Besides, data bursts of the selected channels will not be received for buffering during channel surfing while the information of selected channels will be sequentially displayed on the screen, thus making the channel switching process quicker and easier.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A method for switching mobile television (TV) channels of a mobile computing device, the mobile TV channels comprising an original channel and a plurality of selected channels, the method comprising:
playing the original channel on a screen of the mobile computing device;
sequentially receiving a plurality of channel numbers of the selected channels at a plurality of time points correspondingly, wherein a time interval between adjacent two of the time points is less than a predetermined interval for action;
counting time from a last one of the time points to an action time point, wherein a period of time between the last one of the time points and the action time point is equal to the predetermined time interval for action;
receiving and buffering data bursts of a last one of the selected channels from the action time point to a next time point; and
playing the last one of the selected channels on the screen from the next time point.

2. The method according to claim 1 further comprising:
sequentially displaying the channel numbers on the screen, responsive to reception of the corresponding channel numbers.

3. The method according to claim 2 further comprising:
playing the original channel while the channel numbers are sequentially displayed responsive to reception of the corresponding channel number.

4. The method according to claim 1 further comprising:
stopping playing the original channel on the screen from the action time point.

5. The method according to claim 1 further comprising:
counting time from each of the time points; and
stopping counting time, responsive to reception of a subsequent one of the channel numbers.

6. A mobile computing device capable of switching mobile television (TV) channels, the mobile TV channels comprising an original channel and a plurality of selected channels, the device comprising:
a receiver for receiving data bursts of the original channel;
a screen for playing the original channel thereon;
an input unit for sequentially receiving a plurality pieces of information of switching to the selected channels at a plurality of time points correspondingly, wherein a time interval between adjacent two of the time points is less than a predetermined interval for action;
a counter for counting time from a last one of the time points to an action time point, wherein a period of time between the last one of the time points and the action time point is equal to the predetermined time interval for action; and
a buffer for buffering data bursts of a last one of the selected channels from the action time point to a next time point;
wherein after data bursts of a last one of the selected channels are received by the receiver and buffered by the buffer from the action time point to a next time point, the screen plays the last one of the selected channels thereon from the next time point.

7. The device according to claim 6, wherein the screen sequentially displays a plurality of channel numbers of the selected channels on the screen, responsive to reception of the corresponding piece of information from the input unit.

8. The device according to claim 7, wherein the screen plays the original channel while the channel numbers are sequentially displayed responsive to reception of the corresponding channel number.

9. The device according to claim 6, wherein the counter further counts time from each of the time points, and then stops counting time, responsive to reception of a subsequent one of the plurality pieces of information.

10. A computer readable recording medium, recording a program for switching mobile television (TV) channels of a mobile computing device, the mobile TV channels comprising an original channel and a plurality of selected channels, the program causing a computer to execute:
playing the original channel on a screen of the mobile computing device;
sequentially receiving a plurality of channel numbers of the selected channels at a plurality of time points correspondingly, wherein a time interval between adjacent two of the time points is less than a predetermined interval for action;
counting time from a last one of the time points to an action time point, wherein a period of time between the last one of the time points and the action time point is equal to the predetermined time interval for action;
receiving and buffering data bursts of a last one of the selected channels from the action time point to a next time point; and
playing the last one of the selected channels on the screen from the next time point.

11. The computer readable recording medium according to claim 10,
wherein the program further causes the computer to execute:
sequentially displaying the channel numbers on the screen, responsive to reception of the corresponding channel numbers.

12. The computer readable recording medium according to claim 11,
wherein the program further causes the computer to execute:
playing the original channel while the channel numbers are sequentially displayed responsive to reception of the corresponding channel number.

13. The computer readable recording medium according to claim 11,
wherein the program further causes the computer to execute:
counting time from each of the time points; and
stopping counting time, responsive to reception of a subsequent one of the channel numbers.
